Europäisches Patentamt

European Patent Office

Office européen des brevets

(19)

(11) Veröffentlichungsnummer: **0 185 879**
**B1**

(12) EUROPÄISCHE PATENTSCHRIFT

(45) Veröffentlichungstag der Patentschrift:
20.12.89

(51) Int. Cl.⁴: **F 27 B 1/22, C 22 B 13/02,**
**C 22 B 7/00, F 27 D 17/00**

(21) Anmeldenummer: 85113496.5

(22) Anmeldetag: 24.10.85

(54) **Schachtofen zur Verhüttung von Altblei aus Akkumulatorenschrott mit einer Nachverbrennungsanlage für das beim Verhüttungsprozess entstehende Gichtgas.**

(30) Priorität: 29.11.84 DE 3443452

(43) Veröffentlichungstag der Anmeldung:
02.07.86 Patentblatt 86/27

(45) Bekanntmachung des Hinweises auf die Patenterteilung:
20.12.89 Patentblatt 89/51

(84) Benannte Vertragsstaaten:
AT CH DE FR GB IT LI SE

(56) Entgegenhaltungen:
DE-A- 1 949 996
DE-B- 1 096 556
FR-A- 1 182 489
US-A- 4 340 421

(73) Patentinhaber: VARTA Batterie Aktiengesellschaft, Am
Leineufer 51, D-3000 Hannover 21 (DE)

(72) Erfinder: Niklas, Hans, Dr. Dipl.-Chem., Goethestrasse 3,
D-6239 Eppstein (DE)

(74) Vertreter: Kaiser, Dieter Ralf, Dipl.-Ing.,
Gundelhardtstrasse 72, D-6233 Kelkheim/Ts. (DE)

EP 0 185 879 B1

**Beschreibung**

Die Erfindung betrifft einen Schachtofen zur Verhüttung von Altblei, insbesondere Akkumulatorenschrott, welcher zum Beladen mit Rohmaterial und Zuschlägen eine Beschickungsöffnung, Winddüsen zum Einblasen von Verbrennungsluft, Abstichöffnungen für das erschmolzene Werkblei und die Schlacke sowie eine Nachverbrennungsanlage für das beim Verhüttungsprozeß entstehende Gichtgas besitzt.

Die «Verhüttung» von ganzen Batterien und Fabrikationsabfällen aus Batteriefabriken stellt eine komplexe Kombination von vielen Einzelvorgängen dar, von denen das Einschmelzen des metallischen Anteils und die Reduktion des oxidischen Bleianteils noch die einfachsten sind. Insoweit bestehen Parallelen zum Hochofenprozeß, zumal der Schachtofen für die Blei-Rückgewinnung in seinem grundsätzlichen Aufbau dem Hochofen für die Roheisenerzeugung durch Reduktion oxidischer Eisenerze mit Koks ähnlich ist.

Der Verfahrensablauf bei der Verhütung von Akkumulatorenschrott sowie eine dem derzeitigen technischen Stand entsprechende Ofenanlage werden beispielsweise in der US-PS 4 340 421 beschrieben. Der besondere Vorzug dieser Verhüttung liegt in der direkten Einschmelzbarkeit von Akkumulatoren samt Kastenmaterial und ungeachtet der in diesen noch enthaltenen Säure zusammen mit anderem Bleischrott sowie Zuschlägen an Koks, Retourschlacken, Eisenschrott, Eisenoxid und Kalk. Eine vorherige Zerlegung und Sortierung der schrottreifen Batterien und die damit verbundene hygienische Belastung der Arbeitskräfte entfällt.

Durch die thermische Zersetzung der organischen Werkstoffe der Batterien, insbesondere des Kastenmaterials und der Separatoren, entstehen z.T. flüchtige organische Verbindungen, teerartige Crackprodukte, die mit dem Gichtgas ausgetragen werden. Das im wesentlichen aus den Komponenten $N_2$, $H_2O$, $CO_2$ und CO bestehende Gichtgas ist weiterhin mit nennenswerten Mengen anorganischen Staubes ($PbCl_2$, PbO, $PbSO_4$, $SiO_2$, $Al_2O_3$, FeO, CaO) beladen, während es HCl (aus dem PVC-Anteil am Batterieschrott) und $SO_2$ (aus der Batteriesäure) nur in sehr geringen Mengen enthält, da ersterer mit den Bleiverbindungen zu $PbCl_2$ reagiert, letzteres nach $SO_2 + 2CO \rightarrow S + 2CO_2$ zu Schwefel reduziert wird, der sich mit zugesetztem Eisen zu FeS umsetzt Das Gichtgas enthält, wie aus dem vorigen zu ersehen ist, teils giftige, teils durch ihren Geruch stark störende Substanzen. Es wird deshalb einer thermischen Nachbehandlung unterzogen, bei der das Kohlenmonoxid und die teerartigen und öligen Zersetzungsprodukte restlos zu $CO_2$ und $H_2O$ verbrannt und der anorganische Staubanteil durch Agglomeration zu einer gut filtrierbaren Form umgewandelt wird. Da das Gichtgas im allgemeinen mit einer Temperatur von ca. 150–250 °C aus dem Ofen austritt, ist dazu die Einleitung der Verbrennung durch ein Zünd- oder Schützfeuerung erforderlich.

Nun hat die praktische Erfahrung gelehrt, daß zwar der CO-Anteil nach Zumischung der erforderlichen Verbrennungsluft rasch und leicht zu $CO_2$ oxidiert wird, daß aber das Gemisch aus Ruß und Teer im Verein mit den o.g. anorganischen Verbindungen ausgesprochen langsam verbrennt. Annehmbare Reaktionsgeschwindigkeit erreicht man erst bei Temperaturen im Bereich über 850 °C. Da man den CO-Gehalt aus wirtschaftlichen Gründen niedrig hält und daher bei dessen Verbrennung nur wenig Wärme freigesetzt wird, so kann der o.g. Temperaturbereich nur durch eine relativ große Stützfeuerung erreicht und aufrechterhalten werden. Entsprechend hoch ist der Kostenanteil dieses Brennstoffverbrauchs, gemessen am Gesamtprozeß.

Der Möglichkeit, einen Teil der Energie durch Rückgewinnung in herkömmlicher Weise nutzbar zu machen, z.B. in regenerativen oder rekuperativen Wärmetauschern, stehen mehrere prinzipielle Schwierigkeiten im Wege. Einerseits setzen sich bei Regeneratoren die Speicherflächen rasch mit dem teilweise geschmolzenen anorganischen Material zu; andererseits wirkt bei Stahlrekuperatoren insbesondere das in dem Gichtgas reichlich vorhandene Bleichlorid stark korrosiv – selbst bei hochlegierten Stahlsorten.

Der Erfindung liegt deshalb die Aufgabe zugrunde, eine Vorrichtung anzugeben, die in einer Schachtofenanlage für die Bleirückgewinnung aus Batterieschrott eine vollständige und zugleich wirtschaftliche Entfernung aller flüchtigen, meist öligen und rußhaltigen Begleitstoffe aus dem Gichtgas erlaubt, um danach den anorganischen Staub zur Bleigewinnung herausfiltern zu können. Die Aufgabe wird erfindungsgemäß mit den im kennzeichnenden Teil des Anspruchs 1 angegebenen Mitteln gelöst.

Danach ist in dem vorliegenden technischen Anwendungsfall einer Nachverbrennung, die erst bei Temperaturen oberhalb 800 °C mit hinreichender Geschwindigkeit abläuft, eine rekuperative Wärmenutzung möglich, wenn die Brennzone in einem feuerfesten und chemisch inerten, zugleich aber gut wärmeleitenden Keramikmaterial ausgelegt ist.

Die bei der Nachverbrennung freigesetzte Wärme wird ganz überwiegend durch Strahlung, nur in geringem Maße durch Konvektion aus dem Brennraum an die Wand abgeleitet. Die erfindungsgemäße Vorrichtung stellt daher grundsätzlich einen Strahlungsrekuperator dar; indem jedoch der Wärmeaustausch in gleichzeitiger Wechselwirkung mit der eigentlichen Brennzone erfolgt, knüpft sich an diesen Vorgang ein zusätzlicher überraschender Effekt, welcher am treffendsten mit dem Ausdruck «Rekuperative Feuerung» umschrieben werden kann.

Der Aufbau und die besondere Funktionsweise des Rekuperators gemäß der Erfindung sollen anhand von Figuren näher erläutert werden.

Figur 1 zeigt einen erfindungsgemäßen Strahlungsrekuperator im Längsschnitt.

Figur 2 zeigt eine vorzugsweise Ausführungsform des Rekuperators nach Figur 1 im Querschnitt.

Figur 3 zeigt Temperaturprofile für die Frischluft und das Gichtgas bei erfindungsgemäßer rekuperativer Feuerung über der Anlagenlänge.

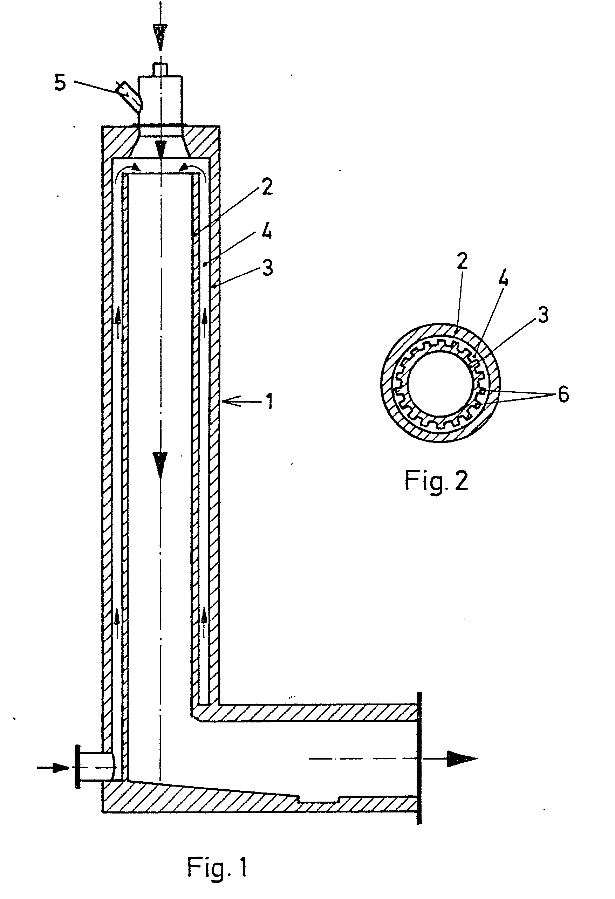

Der Strahlungsrekuperator 1 gemäß Figur 1 bildet den wesentlichen Teil der Nachverbrennungsanlage für das Gichtgas und ist vorteilhaft als Doppelrohr in konzentrischer Anordnung gestaltet, wobei zumindest das Innenrohr 2 aus solchem hochtemperaturfesten Keramikmaterial besteht, welches zugleich hochwärmeleitfähig ist. Das Außenrohr 3 besteht vorzugsweise ebenfalls aus einer Keramik, jedoch muß dieses Rohrmaterial vor allem hitzebeständig und zugleich wärmeisolierend sein. Als Keramikmaterial ist insbesondere Siliciumcarbid, SiC, geeignet, welches geringe Mengen an üblichen Bindemitteln enthält.

Der Aufbau eines Strahlungsrekuperators gemäß der Erfindung kann aus keramischen Bauelementen, beispielsweise Rohrsegmenten, mit den genannten Werkstoffeigenschaften geschehen. Ebenso ist aber auch eine keramische Ganzausführung nach Art eines Hohlblockziegels möglich, bei der profilierte Keramikplatten zu einer doppelwandigen Struktur entsprechend Figur 1 nach bekannten Verfahren der Keramikindustrie verbunden werden.

Durch den vom Innenrohr 2 und vom Außenrohr 3 gebildeten Ringspalt 4 strömt Frischluft (kleine Pfeile) nach oben und wird dabei durch das im Innenrohr abwärts strömende heiße Gichtgas (große Pfeile) vorgewärmt. Dem von oben her eintretenden, mit ca. 250–300 °C verhältnismäßig kalten Gichtgas wird die den Ringspalt verlassende Luft zugemischt. Gegebenenfalls wird zusätzlich durch einen Öl- oder Gasbrenner 5 als Stützfeuerung das Gichtgas aufgeheizt. Nachdem das Gasgemisch – auch als Rauchgas bezeichnet – in das Innenrohr eingetreten ist, verbrennen dort zunächst Gichtgasbestandteile, wie insbesondere CO und – nach Erreichen eines höheren Temperaturniveaus – auch die Crackprodukte. Anschließend kühlen sich die Rauchgase unter Wärmeabgabe an die durch den Ringspalt strömende Luft ab.

Erfindungsgemäß wird dieser Wärmeaustausch in vorteilhafter Weise gefördert, wenn man zwecks Oberflächenvergrößerung die Wand des Innenrohres an der Grenze zum Ringspalt mit zur Rohrachse parallellaufenden Rippen 6 versieht, wie es in Figur 2 angedeutet ist.

Anstelle der Rippen oder zusätzlich zu diesen können auch Nocken dem Außenrohr innenseitig angeformt sein, die das Innenrohr abstützen und zentrieren. Dabei wird die Breite des Ringspalts vorteilhafterweise so dimensioniert, daß sich in ihm eine unter allen Betriebszuständen turbulente Strömung mit einer Reynolds-Zahl(Re) ausbildet, die mindestens bei 4000 liegen sollte.

Nach Verlassen des Innenrohres können die Rauchgase – evtl. nach einer weiteren Abkühlung durch Zumischen von Luft – in die Filter zur Staubabscheidung eingeleitet werden.

Bei der beschriebenen Gasführung durch die erfindungsgemäße Gichtgas-Nachverbrennungsanlage hat sich nun überraschenderweise ergeben, daß bei genügender Baulänge ein Rückfluß von Wärme aus der im unteren Teil des Rekuperators stark vorgeheizten Luft in die Brennstrecke im oberen Teil des Rekuperators erfolgt. Dadurch wird die Verbrennung selbst sehr stark beschleunigt und findet auf einem weit kürzeren Wege statt als ohne diesen Effekt. Die Wirkungsweise der Nachverbrennungsanlage erschöpft sich also nicht in derjenigen eines gewöhnlichen rekuperativen Wärmetauschers, bei dem Wärme aus einem vollständig ausgebrannten Gas zurückgewonnen wird, um damit Luft aufzuheizen. Im erfindungsgemäßen Fall nimmt vielmehr die Luft nur im unteren Teil der Vorrichtung Wärme auf und gibt sie im oberen Teil der Anlage zum erheblichen Teil durch Strahlungsübertragung in die dort noch kühlere Brennzone ab. Dadurh wird der aufsteigende Luftstrom bereits abgekühlt. Er besitzt beim Eintritt in das Innenrohr eine Temperatur von ca. 300 °C, bringt Wärme in das Gichtgas ein und macht den Rest der rekuperativ gewonnenen Wärme nutzbar. Dies ermöglicht eine wesentliche Einsparung an Energiezufuhr durch eine Stützfeuerung.

Die erfindungsgemäße einfache Aufbau der Vorrichtung bringt den wesentlichen Vorteil mit sich, daß der Wärmerückfluß aus der aufgeheizten Luft auf kürzestem Wege durch Strahlung in die Brennzone eingespeist wird, während nur die Restwärme der Luft dem kühlen Gichtgas zugeführt wird.

Unter diesem Gesichtspunkt soll die Länge des Strahlungsrekuperators besonders günstig so dimensioniert werden, daß die maximale Temperatur des Reaktionsgases im Innenrohr und die maximale Temperatur der Luft im Ringspalt annähernd zusammenfallen.

Der sich dank dieser «rekuperativen Feuerung» einstellende Brennzustand, bei dem Temperaturen bis ca. 1200 °C erreicht werden, hat die angestrebte vollständige Verbrennung aller teerartigen Crackprodukte zum Ergebnis. Dieser Erfolg konnte durch Verbrennung des Gichtgases allein mit Luft von Umgebungstemperatur nicht erreicht werden. Außerdem ist zum Erreichen wenigstens der zur Verbrennung der Crackprodukte notwendigen Temperatur von ca. 800 °C nach bisheriger Verfahrensweise in einer bestehenden Nachverbrennungsanlage der Einsatz von 47–50 kg Heizöl/to Werkblei erforderlich. Die erfindungsgemäße Gichtgas-Nachverbrennung mittels rekuperativer Feuerung kommt bei zugleich günstigerer Temperaturführung mit einem Heizölbedarf von vergleichsweise nur 10–14 kg Heizöl/to Werkblei aus.

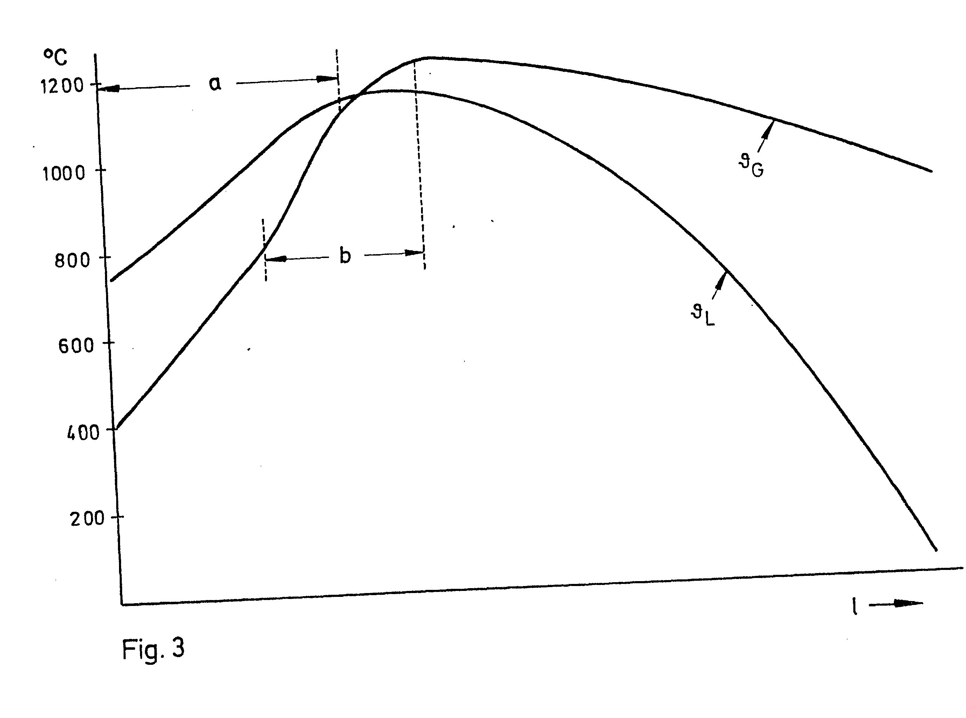

Aus der Kurvendarstellung in Figur 3 ist der Temperaturverlauf im Luftstrom ($\delta_L$) und im zu diesem gegenläufigen Gasstrom ($\delta_G$) über der Länge I der Nachverbrennungsanlage ersichtlich. Dabei bezeichnet a den Längenabschnitt, über dem die Verbrennung der leicht reagierenden Bestandteile des Gichtgases wie z.B. CO erfolgt. Entlang b findet die Verbrennung der Crackprodukte statt, wobei man erkennt, daß sie erst bei ca. 800 °C einsetzt und mit einem Temperaturanstieg bis ca. 1200 °C endet.

Bemerkenswert ist die mit dem Beginn des Streckenabschnitts b zusammenfallende höhere Rate des Temperaturanstiegs beim Gichtgas, die von der in das noch nicht verbrannte Gasgemisch zurückfließenden Wärme ausgeht, die einerseits aus der Verbrennung der Crackprodukte und andererseits aus der Einstrahlung von Wärme aus der aufgeheizten Luft in die Brennzone herrührt. Der nach dem Maximum von $\delta_L$ einsetzende Abfall der Lufttemperatur entspricht der in die Brennzone eingespeisten Wärmemenge.

### Patentansprüche

1. Schachtofen zur Verhüttung von Altblei, insbesondere Akkumulatorenschrott, welcher zur Eingabe von Rohmaterial und Zuschlägen Beschickungsöffnungen, Winddüsen zum Einblasen von Verbrennungsluft, Abstichöffnungen für das erschmolzene Werkblei und die Schlacke sowie eine Nachverbrennungsanlage für das beim Verhüttungsprozeß entstehende Gichtgas besitzt, dadurch gekennzeichnet, daß die Nachverbrennungsanlage ein von zwei konzentrisch angeordneten, hochtemperaturfesten Rohren gebildeter Strahlungsrekuperator (1) ist, dessen Innenrohr (2) aus hochwärmeleitfähigem keramischen Material und dessen Außenrohr (3) aus hitzebeständigem, wärmeisolierendem keramischen Material besteht, mit Mitteln zum Zuführen des Gichtgases zum Innenrohr (2) und zum Zuführen von Verbrennungsluft im Gegenstrom zum Ringspalt (4) zwischen Innenrohr (2) und Außenrohr (3), und daß das Innenrohr (2) im Bereich des Gichtgaseintrittes zum Ringspalt (4) hin offen ist.

2. Schachtofen nach Anspruch 1, dadurch gekennzeichnet, daß das Keramikmaterial des Innenrohrs (2) überwiegend aus Siliziumkarbid (SiC) besteht.

3. Schachtofen nach Anspruch 2, dadurch gekennzeichnet, daß die Wandoberfläche des Innenrohrs (2) auf Seiten des zwischen diesem und dem Außenrohr (3) gebildeten Ringspalts (4) durch angeformte Rippen (6) vergrößert ist.

4. Schachtofen nach Anspruch 2 oder 3, dadurch gekennzeichnet, daß an der Außenrohr-Innenseite Nocken vorgesehen sind, die das Innenrohr abstützen und zentrieren.

5. Schachtofen nach einem der Ansprüche 2 bis 4, dadurch gekennzeichnet, daß der Ringspalt so dimensioniert ist, daß sich darin eine unter allen Betriebszuständen turbulente Strömung ausbildet, deren Reynolds-Zahl nicht unter 4000 liegt.

6. Schachtofen nach einem der Ansprüche 2 bis 5, dadurch gekennzeichnet, daß die Länge des Strahlungsrekuperator so dimensioniert ist, daß die max. Temperatur des Reaktionsgases im Innenrohr und die max. Temperatur der Luft im Ringspalt annähernd zusammenfallen.

### Claims

1. Shaft furnace for smelting waste lead, in particular battery scrap, having charging holes for raw material and additives, blast nozzles for blowing in combustion air, tapping holes for the smelted crude lead and the slack, and an afterburning unit for the furnace gas produced in the smelting process, characterized in that the afterburning unit is a radiation recuperator (1) formed of two concentrically arranged, high temperature-resistant tubes, whose inner pipe (2) consists of a ceramic material of high thermal conductivity and whose outer pipe (3) consists of a heat-resistant, heat-insulating ceramic material, and which has means for feeding the furnace gas to the inner pipe (2) and for feeding combustion air in countercurrent to the annular gap (4) between the inner pipe (2) and outer pipe (3), and that the inner pipe (2) is open towards the annular gap (4) in the region of the furnace gas inlet.

2. Shaft furnace according to claim 1, characterized in that the ceramic material of the inner pipe (2) consists predominantly of silicon carbide (SiC).

3. Shaft furnace according to claim 2, characterized in that the wall surface area of the inner pipe (2) is enlarged by moulded-on fins (6) on the sides of the annular gap (4) formed between this inner pipe and the outer pipe (3).

4. Shaft furnace according to claim 2 or 3, characterized in that studs which support and centre the inner pipe are provided on the inside of the outer pipe.

5. Shaft furnace according to one of Claims 2 to 4, characterized in that the annular gap is of such dimensions that turbulent flow having a Reynolds number of not less than 4,000 is formed therein under all operating conditions.

6. Shaft furnace according to one of Claims 2 to 5, characterized in that the length of the radiation recuperator is sized such that the maximum temperature of the reaction gas in the inner pipe and the maximum temperature of the air in the annular gap are approximately the same.

### Revendications

1. Four à cuve pour la refusion de déchets de plomb, en particulier de déchets d'accumulateurs, qui possède des ouvertures de chargement pour l'introduction du matériau brut et des fondants, des tuyères à vent pour insuffler de l'air de combustion, des ouvertures de coulée pour le plomb d'œuvre fondu et les scories ainsi qu'une installation de post-combustion pour le gaz de haut-fourneau produit au cours du processus de refusion, caractérisé en ce que l'installation de post-combustion est un récupérateur par rayonnement (1) constitué par deux tubes disposés de façon concentrique et résistant aux hautes températures, le tube interne (2) consistant en un matériau céramique hautement conducteur de la chaleur et le tube externe (3) consistant en un matériau céramique résistant à la chaleur et isolant thermique, avec des moyens pour conduire le gaz de haut-fourneau au tube interne (2) et pour conduire l'air de combustion à contre-courant à la fente annulaire (4) entre le tube interne (2) et le tube externe (3), et en ce que le tube interne (2) est ouvert en direction de la fente annulaire (4) dans la zone d'introduction du gaz de haut-fourneau.

2. Four à cuve selon la revendication 1, caractérisé en ce que le matériau céramique du tube interne (2) consiste principalement en carbure de silicium (SiC).

3. Four à cuve selon la revendication 2, caractérisé en ce que la surface de paroi du tube interne (2) est augmentée par des nervures (6) formées du côté de la fente annulaire (4) formée entre celui-ci et le tube externe (3).

4. Four à cuve selon la revendication 2 ou 3, caractérisé en ce que des saillies qui soutiennent et centrent le tube interne sont prévues du côté interne du tube externe.

5. Four à cuve selon l'une des revendications 2 à 4, caractérisé en ce que la fente annulaire est dimensionnée de telle façon qu'il se forme dans celle-ci un écoulement turbulent dans toutes les conditions de fonctionnement dont le nombre de Reynolds n'est pas inférieur à 4000.

6. Four à cuve selon l'une des revendications 2 à 5, caractérisé en ce que la longueur du récupérateur par rayonnement est dimensionnée de telle façon que la température maximale du gaz de réaction dans le tube interne coïncide approximativement avec la température maximale de l'air dans la fente annulaire.

Fig. 2

Fig. 1

Fig. 3